# NOUVEAU FASCICULE DE BREVET EUROPEEN

(11) **EP 0 581 626 B2**
(45) Date de publication et mention de la décision concernant l'opposition: **02.07.2003**
(45) Mention de la délivrance du brevet: 17.04.1996
(21) Numéro de dépôt: 93401698.1
(22) Date de dépôt: 30.06.1993
(51) Int. Cl.: B64C 1/06, B64C 1/00

(54) **Structure de fuselage pour hélicoptère**
Hubschrauberrumpf-Struktur
Helicopter fuselage structure

(30) Priorité: 22.07.1992 FR 9209052
(43) Date de publication de la demande: 02.02.1994
(73) Titulaire: EUROCOPTER, 13725 Marignane Cédex (FR)
(72) Inventeur: Bietenhader, Claude, F-13410 Lambesc (FR)
(74) Mandataire: Bonnetat, Christian

(56) Documents cités:
- FR-A- 455 352
- FR-A- 856 669
- FR-A- 2 063 143
- FR-A- 2 629 045
- US-A- 2 827 251
- "Fundamentals of Helicopter Maintenance" Aviation Maintenance Publishers Inc., 211 South Fourth Street, Basin, Wyoming (US), 1980, p.432-434
- Maintenance manual Ecureuil AS350, AS355, p. 43, 46
- "Cabin Configurations Bell 214ST",Flight International, 30.06.1979, p.2347
- "Aviation Magazine" 01.06.1976 p.28,30,31
- "Ecureuil AS350/355 maintenance" (extrait)

## Description

La présente invention concerne un fuselage d'hélicoptère selon le préambule de la revendication 1. Un tel fuselage est par exemple décrit dans le document "Hélicoptères ECUREUIL AS 350 et AS 355 1974-1980.

Quoique le fuselage conçu selon l'invention puisse être utilisé dans de nombreuses applications, la présente invention sera plus spécialement décrite ci-après en rapport avec la conception d'un hélicoptère léger, et plus particulièrement d'un hélicoptère comportant une cabine en porte-à-faux par rapport au plan transversal de l'appareil contenant la verticale passant par le centre du moyeu du rotor principal.

Selon une conception classique, l'architecture générale d'un hélicoptère léger comporte trois parties essentielles qui assurent des fonctions distinctes.

La première partie, appelée structure centrale, forme un ensemble rigide auquel sont transmis tous les efforts qui sont appliqués à l'appareil durant ses différentes phases de vol et notamment les efforts dus au rotor principal, au rotor anticouple, au train d'atterrissage, aux charges transportées, etc ...

Cette structure centrale sert également de support à différents composants de l'hélicoptère, et notamment à la boîte de transmission, au rotor principal, aux moteurs et aux réservoirs de carburant.

La seconde partie, appelée structure arrière ou poutre de queue, est reliée à la structure centrale et elle supporte notamment le rotor arrière anticouple. Cette structure arrière est en principe du type coque, ou monocoque, et elle est constituée de cadres, ou couples, de forme généralement circulaire ou quasi-circulaire, qui présentent une très grande rigidité et qui sont enveloppés par des éléments de revêtement travaillant qui participent à la rigidité de la structure arrière et qui sont dans ce but raidis longitudinalement en flexion, par exemple par les lisses. La structure arrière est habituellement boulonnée ou rivetée sur la face arrière de la structure centrale.

La troisième partie, également appelée structure avant ou barque, est généralement constituée d'une ossature de tubes soudés, ou d'éléments réalisés en matériaux composites, formant un châssis de verrière de cockpit sur lequel viennent se fixer les différentes portes, le plafond et le bulbe de vision. Cette structure de verrière est habituellement fixée par boulonnage ou par rivetage sur le plancher de cabine et sur la face avant de la structure centrale.

Pour la conception de la structure centrale, différentes solutions ont été proposées afin de lui conférer notamment une grande rigidité.

Selon une première conception, la structure centrale comporte une ossature réalisée sous la forme d'un treillis tubulaire qui est muni d'éléments d'habillage fixes ou amovibles, ainsi que d'éléments mobiles tels que des portes, qui constituent la peau d'enveloppe de la partie centrale du fuselage d'hélicoptère.

Afin d'augmenter la rigidité de la structure centrale et d'en simplifier la réalisation, il a été proposé de la réaliser au moyen d'au moins deux cadres, ou couples rigides, ou au moyen de cloisons pleines raidies formant des cadres, et dont les contours externes correspondent à la forme du fuselage. Ces deux cadres sont reliés entre eux par des éléments de revêtements travaillant qui participent à la rigidité de la structure, dont la forme correspond à l'enveloppe externe du fuselage et qui sont raidis longitudinalement en flexion par des lisses pour former une structure du type coque, ou monocoque. Les cadres peuvent aussi être reliés par des poutres longitudinales ou des longerons et des éléments de revêtement minces non raidis qui constituent la peau d'enveloppe du fuselage, formant une structure à âme mince ou à revêtement semi-travaillant, et/ou des cloisons longitudinales.

La structure centrale se présente alors sous la forme d'un caisson et est généralement raidie dans sa partie inférieure par la structure de barque dont la partie avant, qui s'étend en porte-à-faux, supporte au moins en partie la cabine et le cockpit. La structure centrale en forme de caisson comporte des accès latéraux permettant d'accéder aux réservoirs de carburant ainsi qu'à une ou plusieurs soutes de transport.

Une telle conception a pour principaux inconvénients d'être complexe et coûteuse à réaliser et de limiter les possibilités d'utilisation de l'hélicoptère, et notamment d'en réduire les capacités et les modalités de chargement.

La présente invention a pour objet de remédier à ces inconvénients et comprend à cette fin les caractéristiques de la revendication 1. D'autres caractéristiques sont décrites dans les revendications dépendantes 2 à 15. .

Les figures des dessins annexés feront bien comprendre comment l'invention peut être réalisée. Sur ces figures, des références identiques désignent des éléments semblables.

La figure 1 est une vue latérale partielle d'un hélicoptère léger dont la structure centrale est réalisée conformément aux enseignements de l'invention.

La figure 2 est une vue similaire à celle de la figure 1 sur laquelle les différents composants sont illustrés de manière éclatée pour faire apparaître la forme générale de l'ossature centrale réalisée conformément aux enseignements de l'invention.

La figure 3 est une vue schématique en perspective d'un mode de réalisation préféré de l'ossature centrale, dont les panneaux constitutifs sont illustrés en traits pleins ou pointillés, et sur laquelle on a également représenté en silhouette, à l'aide de traits mixtes, des éléments complémentaires.

La figure 4 est une vue en perspective sur laquelle sont représentés les six panneaux principaux constitutifs de l'ossature hexaédrique avec leurs ouvertures respectives.

La figure 5 est une vue similaire à celle de la figure 4, de laquelle on a ôté le panneau transversal avant.

La figure 6 est une vue de détail illustrant en perspective le panneau transversal arrière.

La figure 7 est une vue similaire à celle de la figure 5 faisant apparaître les deux cloisons horizontales de séparation du volume interne de l'ossature hexaédrique.

La figure 8 est une vue similaire à celle de la figure 7, de laquelle on a ôté l'un des deux panneaux transversaux.

La figure 9 est une vue en perspective sur laquelle on a représenté le panneau transversal arrière et une variante de réalisation des deux panneaux latéraux qui comportent chacun une partie d'un longeron avant.

La figure 10 est une vue similaire à celle de la figure 9 sur laquelle sont illustrés en outre les autres panneaux constitutifs de l'ossature, les cloisons horizontales de séparation, ainsi que des éléments de raidissement des longerons avant.

La figure 11 est une vue similaire à celle de la figure 10 sur laquelle sont illustrés des éléments complémentaires constituant notamment le plancher de cabine ainsi que des tablettes complémentaires.

La figure 12 est une vue en élévation latérale du fuselage d'hélicoptère illustrant un premier mode de chargement de la soute formée dans l'ossature centrale.

La figure 13 est une vue de dessus en coupe partielle de l'hélicoptère illustré sur la figure 12.

Les figures 14 à 21 sont des vues, deux à deux similaires à celles illustrées par les figures 12 et 13, qui représentent divers modes de chargement et d'utilisation d'un hélicoptère dont le fuselage est réalisé conformément aux enseignements de l'invention.

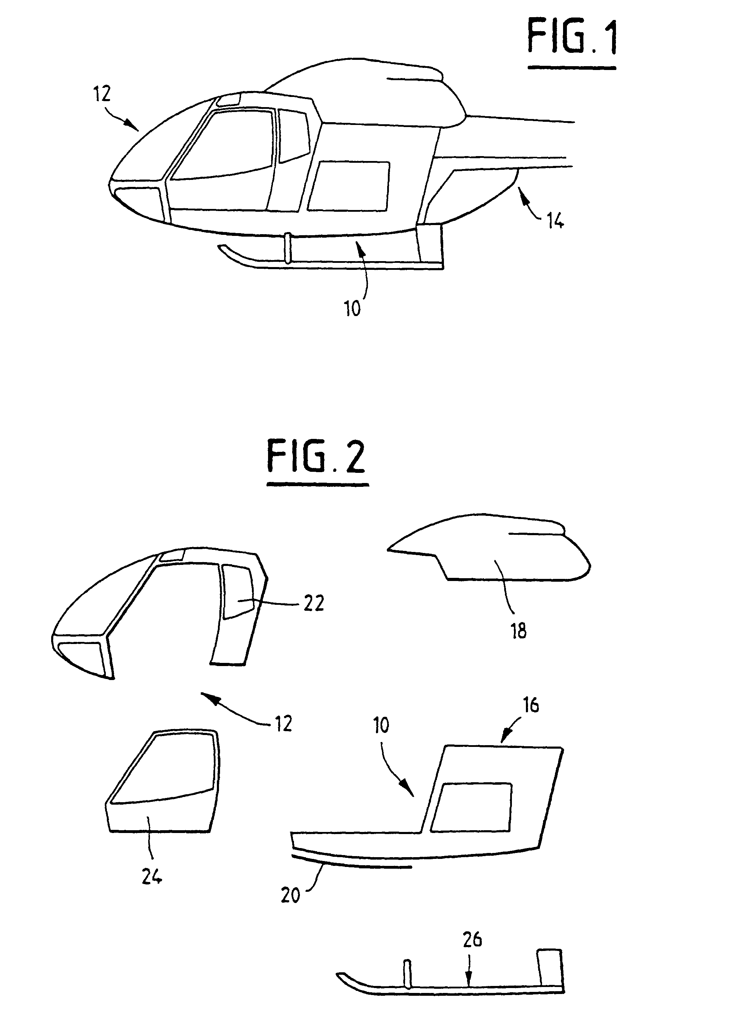

L'hélicoptère illustré sur la figure 1 comporte une partie centrale 10, une partie avant 12 et une partie arrière 14.

La partie centrale 10 est constituée par une ossature centrale 16 illustrée sur la figure 2 sur laquelle sont montés des éléments d'habillage tels que par exemple un capot supérieur 18 et un carénage inférieur 20.

La partie avant 12 comporte une verrière 22 et des portes 24.

La partie arrière 14 est, selon une conception classique, constituée par une poutre de queue qui ne sera pas décrite plus en détails.

La partie centrale 10 reçoit également un train d'atterrissage 26, par exemple du type à patins.

Conformément à l'invention, la partie centrale 10 de la structure de l'hélicoptère comporte une ossature 16, illustrée notamment sur les figures 4 à 6, qui est constituée d'un panneau transversal avant 28, d'un panneau transversal arrière 30, d'un panneau latéral gauche 32, d'un panneau latéral droit 34, d'un panneau horizontal supérieur 36 et d'un panneau horizontal inférieur 38.

Le panneau transversal avant 28, qui est prévu pour supporter la structure avant de l'hélicoptère, se prolonge transversalement au-delà du contour rectangulaire délimité par les panneaux latéraux 32,34 et par le panneau supérieur 36, de manière à constituer une cloison transversale du fuselage, dont le contour extérieur 39 correspond sensiblement à la forme extérieure de l'enveloppe de la partie centrale du fuselage d'hélicoptère.

Le panneau transversal avant comporte une ouverture centrale rectangulaire 40 dont la largeur est telle qu'elle s'étend transversalement jusqu'aux panneaux latéraux 32 et 34.

Le panneau transversal arrière 30, qui est prévu pour supporter la poutre de queue et la traverse arrière du train d'atterrissage à patins, se prolonge également transversalement de part et d'autre des panneaux latéraux 32 et 34, de manière que son contour 42 corresponde en partie au profil du fuselage dans sa partie centrale.

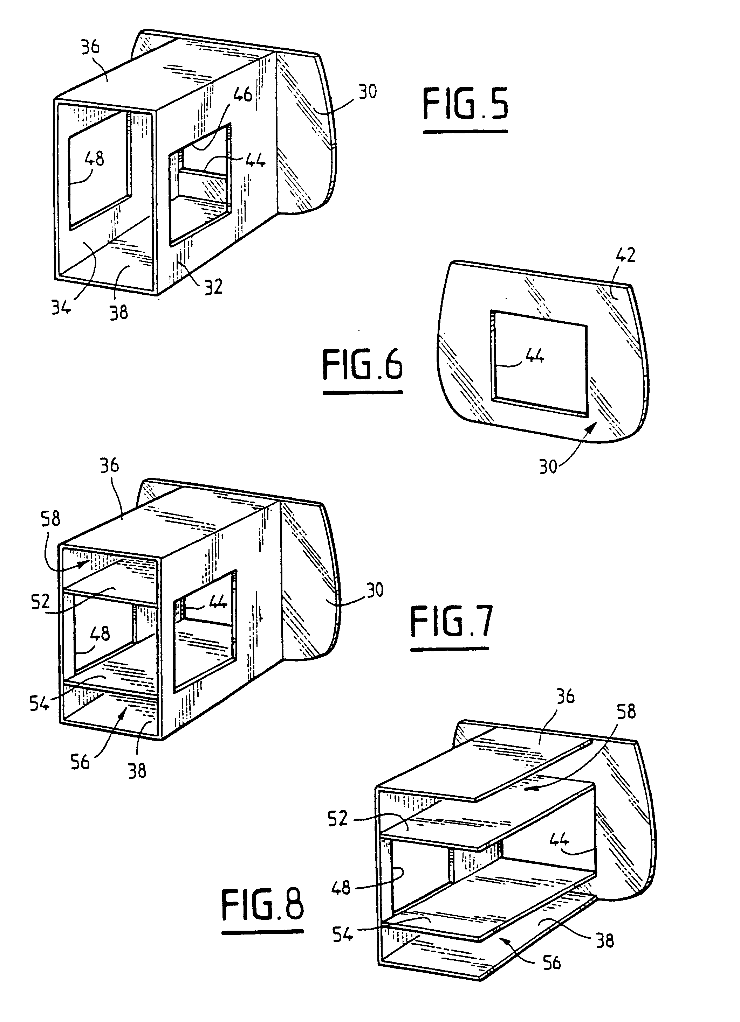

Le panneau transversal arrière 30 comporte une ouverture centrale rectangulaire 44, de mêmes dimensions que celles de l'ouverture centrale 40 (figure 6).

Les panneaux latéraux parallèles 32 et 34 sont de forme sensiblement rectangulaire et comportent chacun une ouverture centrale rectangulaire 46 et 48 respectivement.

Le panneau supérieur 36 est un panneau rectangulaire plein qui est prévu pour supporter la boîte de transmission principale, les bielles de suspension du mât rotor, désignées par la référence 50 sur la figure 3, le ou les moteurs, ainsi que les organes de commande du rotor principal.

Les panneaux 28, 30, 32, 34 et 36 sont par exemple réalisés en alliage d'aluminium embouti, cette technique permettant d'obtenir en une seule opération, à partir d'un flan de métal, un panneau raidi grâce à des emboutissements locaux, et des trous à bords tombés munis des interfaces nécessaires à sa jonction avec les autres panneaux, par exemple au moyen de profilés tels que des éclisses.

A titre de variante, les panneaux pourraient par exemple être réalisés à partir de matériaux composites.

Le panneau horizontal inférieur 38 est de préférence réalisé sous forme d'un sandwich aluminium-structure synthétique en nid d'abeille, notamment lorsqu'il est prévu pour supporter la masse d'un réservoir de carburant, comme cela sera expliqué plus avant.

Conformément à l'invention, on divise le volume interne de l'ossature hexaédrique 16 en trois volumes superposés horizontalement.

Cette solution est illustrée notamment par les figures 7 et 8 sur lesquelles sont illustrées une cloison horizontale supérieure 52 et une cloison horizontale inférieure 54.

Les cloisons 52 et 54 sont constituées par des panneaux de forme sensiblement rectangulaire.

Les cloisons 52 et 54 sont positionnées de manière à délimiter verticalement les ouvertures 40, 44, 46 et 48 formées dans les panneaux verticaux correspondants.

La cloison horizontale inférieure 54, qui est de préférence réalisée en alliage d'aluminium embouti, obture de manière étanche, et par le dessus, un premier compartiment ou caisson inférieur 56.

Le caisson inférieur parallélépipédique 56 constitue un caisson de torsion, ainsi qu'un réservoir inférieur de carburant.

La cloison inférieure 54 doit être démontable afin de pouvoir accéder à une outre souple (non représentée) qui reçoit le carburant et qui est agencée dans le caisson 56.

La cloison supérieure horizontale 52, qui est de préférence réalisée sous la forme d'une structure en sandwich, ferme de façon étanche, et par le dessous, un compartiment ou caisson supérieur 58.

Le caisson supérieur parallélépipédique 58 constitue un caisson de torsion ainsi qu'un réservoir supérieur de carburant.

La cloison supérieure 52 doit être conçue de manière démontable de manière à permettre l'accès à l'outre qui contient le carburant.

Comme cela est illustré sur la figure 3, la structure avant de l'hélicoptère comporte deux longerons avant 60 et 62 pour constituer une structure dite en forme de barque.

Les longerons 60 et 62 peuvent être reliés transversalement par des traverses (non représentées), ainsi que par une tôle en alliage léger 64 constituant tout ou partie du plancher de cabine.

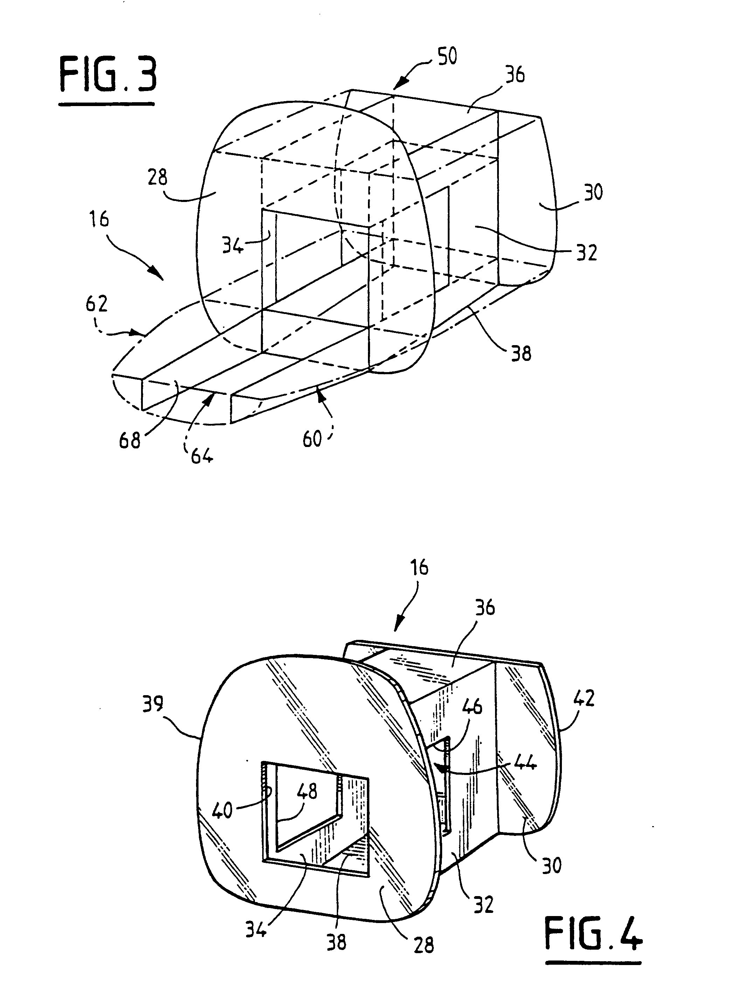

Selon le mode de réalisation illustré sur les figures 9 et 10, les longerons 60 et 62 sont pour l'essentiel constitués par deux prolongements 66 et 68 des panneaux latéraux 32 et 34, qui viennent par exemple de matière avec ces derniers.

Les longerons sont raidis par des plaques complémentaires horizontales 70 et 72 et par des plaques transversales d'extrémité 74 et 76, illustrées sur la figure 10.

Dans la variante illustrée sur la figure 11, le plancher de cabine peut être constitué par une seule plaque horizontale 78 et la rigidification des longerons peut être complétée par une plaque transversale avant 80.

Les longerons 60 et 62 peuvent, à titre de variante, être réalisés sous la forme d'éléments indépendants des panneaux latéraux et être fixés par des éclisses sur les flancs latéraux inférieurs du caisson de torsion inférieur 56 de l'ossature hexaédrique centrale 16.

La cloison transversale arrière 30 est prévue pour recevoir la poutre de queue qui est par exemple constituée par un revêtement à structure en sandwich raidi par des cadres ou couples rigides constituant une structure monocoque.

La poutre de queue est boulonnée de manière discrète, de préférence en quatre points situés aux quatre coins de la portion supérieure du panneau transversal arrière 30 qui délimite le caisson supérieur de torsion 58.

Comme cela est illustré par les figures 3 et 11, l'ossature centrale 16 peut être complétée par des tablettes horizontales 82 qui s'étendent longitudinalement entre les cloisons transversales 28 et 30 et qui sont prévues pour recevoir par exemple des équipements électriques installés latéralement.

L'ossature centrale selon l'invention permet de réaliser la structure centrale à partir d'éléments plans particulièrement faciles à réaliser et nécessitant des outillages moins complexes et moins coûteux que ceux nécessaires pour la réalisation d'éléments de structure de formes gauches utilisés pour la fabrication de structures centrales du type monocoque.

Les panneaux plans peuvent être assemblés de manière rapide et fiable.

Les formes extérieures du fuselage de l'hélicoptère, dans sa partie centrale, résultent de l'utilisation d'éléments d'habillage qui ne participent pas à la transmission des efforts principaux.

L'utilisation optimale du volume interne de l'ossature selon l'invention permet, en le divisant en trois volumes verticaux superposés, de réaliser deux caissons de torsion en partie supérieure et inférieure assurant une excellente reprise des efforts, permettant de réduire la masse globale de l'ossature centrale et permettant de simplifier la fixation de la structure arrière sur la structure centrale.

La division du volume interne de l'ossature hexaédrique permet également de dégager, dans la zone centrale, un large volume de chargement, appelé soute.

La soute comporte, sur chacune de ses quatre faces verticales, une large ouverture permettant de multiples utilisations de l'appareil.

La soute peut être munie à l'avant d'une trappe débouchant dans la cabine tandis que son plancher constitué par la cloison horizontale inférieure 54 s'étend de préférence dans le prolongement du plancher de cabine.

A l'arrière, c'est-à-dire au-delà du panneau transversal arrière 30, la soute peut être fermée par des capots formant portes, qui assurent de plus la continuité des écoulements aérodynamiques entre la partie centrale du fuselage et la poutre de queue.

Les éléments latéraux de revêtement de l'ossature centrale 16 peuvent être munis latéralement, à gauche et à droite, d'une porte de dimensions correspondant à celles de l'ouverture latérale de la soute.

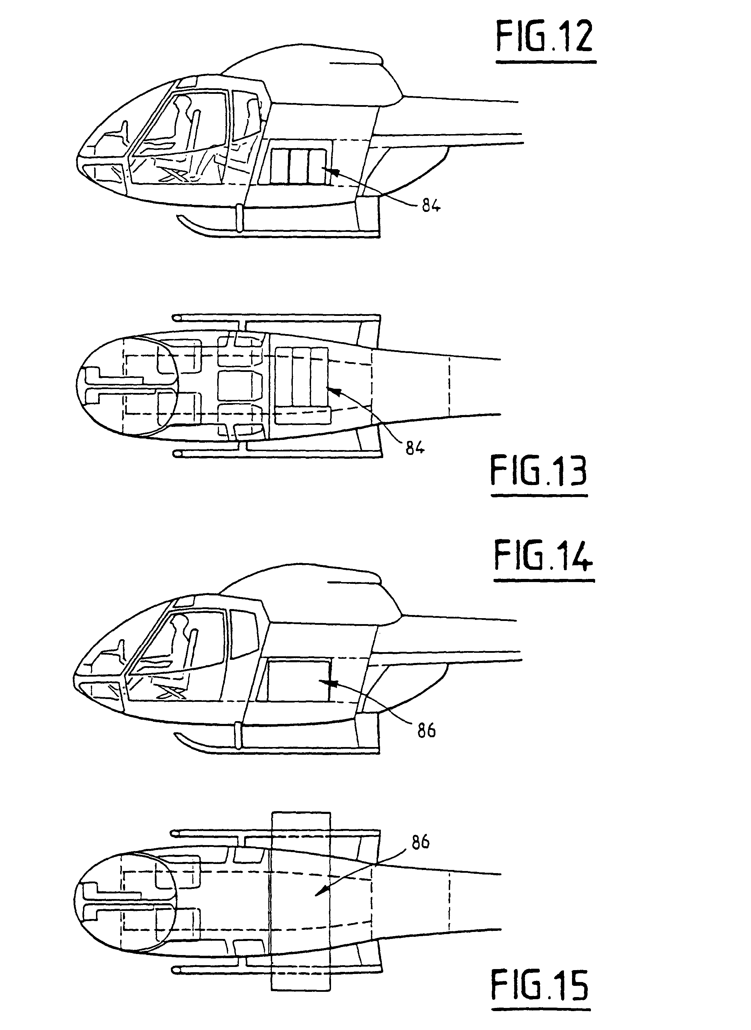

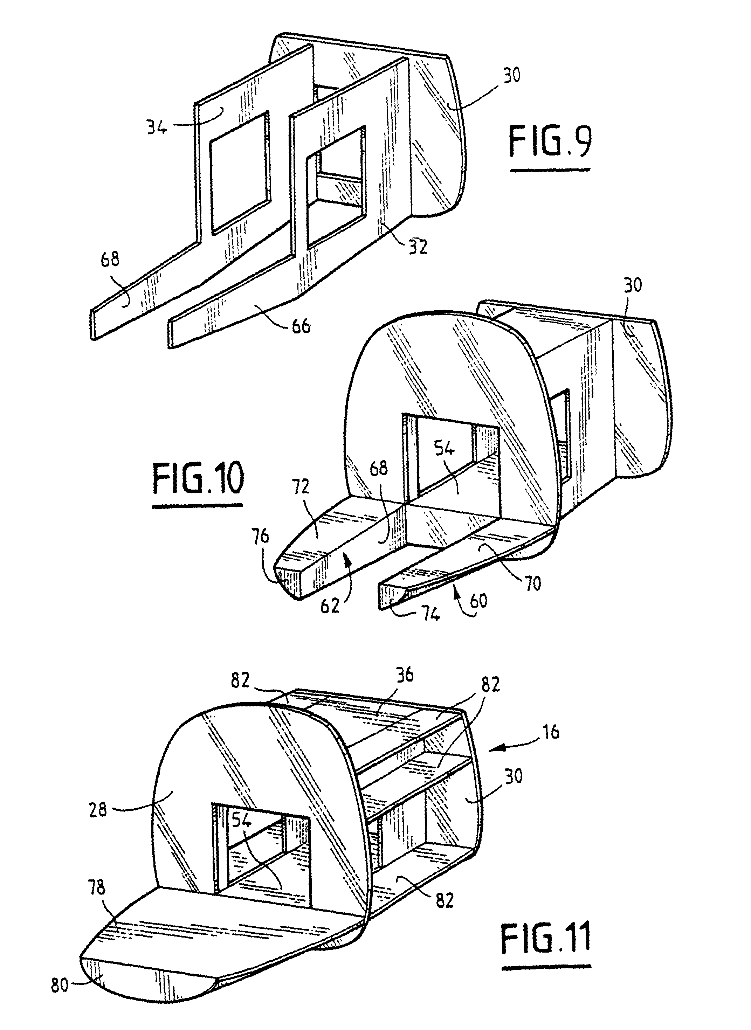

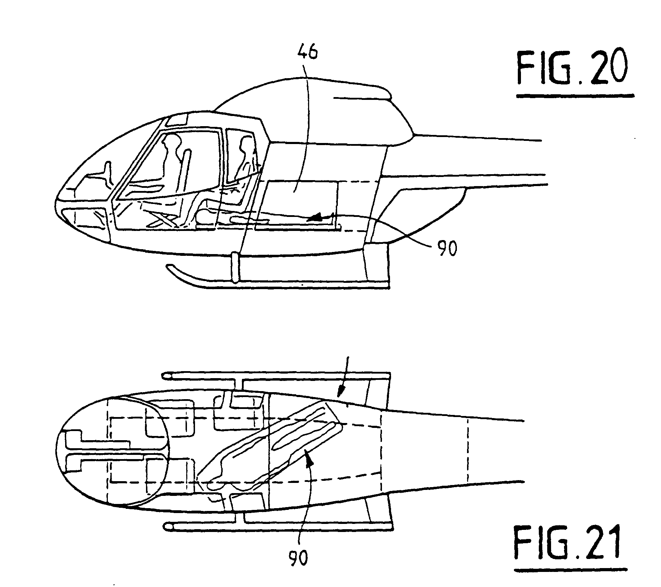

La soute hexaédrique munie de ses quatre ouvertures qui coïncident avec des portes ou des trappes permet de nombreuses utilisations qui sont illustrées sur les figures 12 à 21.

Sur les figures 12 et 13, on voit une utilisation classique dans laquelle la soute 84 constitue un volume important de chargement, du type coffre à bagages, avec différentes possibilités d'accès latéral ou par l'arrière.

Les figures 14 et 15 illustrent la possibilité de transporter transversalement une charge 86 de grande longueur et de poids important faisant saillie latéralement à travers les ouvertures 46 et 48, ce qui est particulièrement avantageux dans la mesure où cela ne provoque pas de modification du centrage des masses de l'hélicoptère, car la charge s'étend transversalement sensiblement en dessous du centre de la tête de rotor.

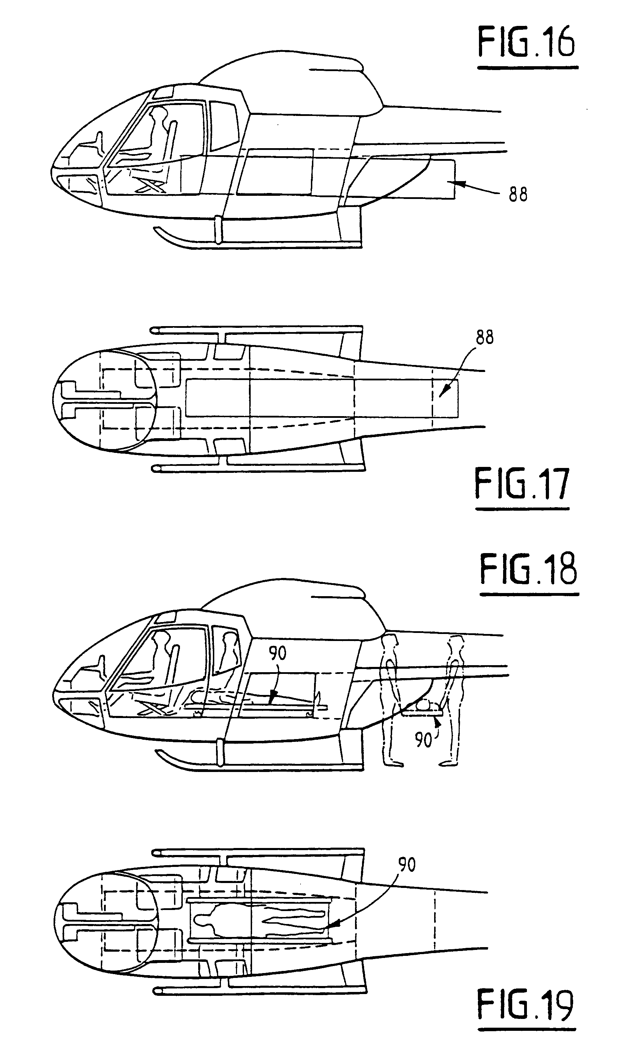

Sur les figures 16 et 17, on a illustré la possibilité de transporter longitudinalement une charge 88 de grande longueur qui peut s'étendre (à travers l'ouverture 40), au-delà de la soute, en partie à l'intérieur de la cabine, par exemple en procédant au démontage préalable d'un ou plusieurs sièges arrière. Comme on le voit sur les figures 16 et 17, la charge peut dépasser longitudinalement vers l'arrière, au-delà de la partie centrale, à travers l'ouverture centrale 44 formée dans le panneau transversal arrière 30, après avoir démonté les portes arrières, et ceci sans interférer avec la poutre de queue qui est reliée au caisson supérieur de torsion, au-dessus de l'ouverture arrière 44.

Sur les figures 18 et 19, on a illustré la possibilité d'utiliser l'hélicoptère conforme à l'invention pour une évacuation sanitaire avec chargement par l'arrière d'une civière 90, qui peut par exemple coulisser sur des rails.

Cette utilisation permet d'effectuer le vol après avoir fermé toutes les portes et avec deux membres du personnel soignant, ou avec une personne et un bloc technique médical.

Sur les figures 20 et 21, on a illustré une application pour une évacuation sanitaire avec chargement latéral de la civière 90. Le vol peut être effectué après fermeture de toutes les portes. Par rapport à la configuration précédente, ce mode d'évacuation sanitaire permet d'effectuer un treuillage de la civière, ou un chargement au sol que le pilote peut contrôler visuellement depuis son poste de pilotage. De plus, le blessé et le personnel soignant sont moins exposés aux gaz d'échappement du moteur ainsi qu'au rotor tournant. Le personnel soignant a également un accès plus facile à la porte de chargement de la civière.

D'autres utilisations sont possibles, et notamment celles nécessitant le transport d'accessoires volumineux, par exemple pour l'épandage agricole, en démontant les portes latérales de la soute, et ceci sans dégrader le centrage des masses de l'hélicoptère.

La conception selon l'invention facilite également les opérations de maintenance dans la mesure où le seuil des portes latérales de la soute constitue une plateforme pour le personnel mécanicien devant intervenir sur les organes mécaniques principaux situés sur le panneau horizontal supérieur 36.

La soute permet également au personnel d'entretien d'accéder aisément aux cloisons horizontales démontables qui ferment les compartiments recevant les réservoirs de carburant lorsqu'une intervention sur ces derniers est nécessaire.

Enfin, l'architecture selon l'invention confère de nombreuses possibilités pour agencer les commandes de vol, rigides ou non, dans les différents espaces dégagés entre l'ossature centrale et les éléments de revêtement extérieur du fuselage. Les commandes de vol deviennent ainsi facilement accessibles pour toutes les opérations de maintenance par démontage de trappes d'accès.

## Revendications

1. Fuselage d'hélicoptère du type comportant une structure centrale (10) à laquelle sont reliés une structure avant (12), une structure arrière (14) et un train d'atterrissage (26), et qui supporte une boîte de transmission, un rotor principal et au moins un moteur (50), et du type dans lequel la structure centrale comporte une ossature (16) munie d'éléments d'habillage qui définissent la forme extérieure du fuselage, ladite ossature (16) comprenant un panneau plan transversal avant (28), un panneau plan transversal arrière (30), deux panneaux plans latéraux (32, 34) et un panneau plan horizontal supérieur (36), ledit panneau transversal avant (28) et ledit panneau transversal arrière (30) étant prévus pour supporter respectivement ladite structure avant (12) et ladite structure arrière (14) et chacun desdits panneaux transversaux avant (28) et arrière (30) se prolongeant transversalement de manière à constituer une cloison transversale dont le contour (39,42) correspond sensiblement au profil de la section transversale correspondante de la forme extérieure du fuselage, l'un au moins des deux panneaux latéraux (32,34) et l'élément d'habillage correspondant comportant respectivement des ouvertures (46,48) donnant accès audit volume interne de ladite ossature (16),
**caractérisé en ce que** :
- ladite ossature (16) comporte, en plus des cinq panneaux (28,30,32,34,36) précités, un sixième panneau plan horizontal inférieur (38) ;
- ladite ossature (16) est constituée desdits six panneaux (28-38) assemblés entre eux pour former un caisson délimitant un volume interne formant une soute de chargement, par exemple du type coffre à bagages ; et
- l'ouverture dans ledit élément d'habillage correspondant audit panneau latéral (32, 34) présente des dimensions correspondant à celles de l'ouverture (46,48) dans ce dernier, de sorte que ledit chargement a accès à ladite soute à travers lesdites ouvertures.

2. Fuselage d'hélicoptère selon la revendication 1,
**caractérisé en ce que** lesdits panneaux (28-38) de l'ossature (16) sont deux à deux parallèles et deux à deux orthogonaux.

3. Fuselage d'hélicoptère selon l'une des revendications 1 ou 2,
**caractérisé en ce que** l'un au moins des panneaux transversaux (28,30) comporte une ouverture intérieure (40,44) donnant accès audit volume interne de l'ossature (16).

4. Fuselage d'hélicoptère selon la revendication 3,
**caractérisé en ce que** ladite ouverture intérieure (40,44) est délimitée latéralement par les deux panneaux latéraux (32,34).

5. Fuselage d'hélicoptère selon l'une quelconque des revendications 1 à 4, **caractérisé en ce que** le volume interne de l'ossature (16) est partagé par au moins une cloison horizontale (52,54).

6. Fuselage d'hélicoptère selon la revendication 5,
**caractérisé en ce que** le volume interne de l'ossature est partagé en trois zones superposées verticalement, par deux cloisons horizontales supérieure (52) et inférieure (54).

7. Fuselage d'hélicoptère selon la revendication 6,
**caractérisé en ce que** la cloison horizontale supérieure (52) coopère avec le panneau horizontal supérieur (36) et avec des portions correspondantes des panneaux transversaux (28,30) et latéraux (32,34) pour former un caisson supérieur (58) de l'ossature, **en ce que** la cloison horizontale inférieure (52) coopère avec le panneau horizontal inférieur (38) et les portions correspondantes des panneaux transversaux (28,30) et latéraux (32,34) pour former un caisson inférieur (56) de l'ossature, et **en ce que** les faces en vis-à-vis des cloisons horizontales supérieure (52) et inférieure (54) constituent le fond et le plancher d'une soute.

8. Fuselage d'hélicoptère selon l'une quelconque des revendications 6 ou 7, prises en combinaison avec les revendications 3 ou 4,
**caractérisé en ce que** chaque ouverture intérieure (40,44) formée dans un panneau transversal (28,30) est délimitée verticalement par les cloisons horizontales supérieure (52) et inférieure (54).

9. Fuselage d'hélicoptère selon l'une quelconque des revendications 6 à 8, **caractérisé en ce que** chaque ouverture intérieure (46,48) formée dans un panneau latéral (32,34) est délimitée verticalement par les cloisons horizontales supérieure (52) et inférieure (54).

10. Fuselage d'hélicoptère selon l'une quelconque des revendications 1 à 9, **caractérisé en ce que** la structure avant comporte deux longerons (60,62) qui sont reliés respectivement aux parties inférieures des panneaux latéraux (32,34).

11. Fuselage d'hélicoptère selon la revendication 10,
**caractérisé en ce que** au moins une partie de chacun des deux longerons (60,62) est réalisée en une seule pièce avec le panneau latéral correspondant (32,34).

12. Fuselage d'hélicoptère selon l'une quelconque des revendications 6 à 8, **caractérisé en ce que** la structure avant comporte un plancher de cabine qui s'étend sensiblement dans le prolongement de la cloison horizontale inférieure (54).

13. Fuselage d'hélicoptère selon l'une quelconque des revendications 1 à 12,
**caractérisé en ce que** la structure avant comporte des moyens de fixation sur le panneau transversal avant (28).

14. Fuselage d'hélicoptère selon l'une quelconque des revendications 1 à 13, **caractérisé en ce que** la structure arrière comporte des moyens de fixation sur le panneau transversal arrière (30).

15. Fuselage d'hélicoptère selon la revendication 14 prise en combinaison avec la revendication 7,
**caractérisé en ce que** la structure arrière comporte des moyens de fixation sur la portion du panneau transversal arrière (30) qui délimite le caisson supérieur (58).

## Claims

1. Helicopter fuselage of the type including a central structure (10) to which are linked a front structure (12), a rear structure (14) and a landing gear (26) and which supports a transmission gearbox, a main rotor and at least one engine (50), and of the type in which the central structure includes a skeleton (16) fitted with covering elements which define the external shape of the fuselage, the said skeleton (16) comprising a front transverse flat panel (28), a rear transverse flat panel (30), two lateral flat panels (32, 34), and an upper horizontal flat panel (36), the said front transverse panel (28) and the said rear transverse panel (30) being designed respectively to support the said front structure (12) and the said rear structure (14) and each of the said front (28) and rear (30) transverse panels being extended transversely so as to constitute a transverse partition whose contour (39, 42) corresponds substantially to the profile of the corresponding cross-section of the external shape of the fuselage, at least one of the lateral panels (32, 34) and the corresponding covering element respectively including apertures (46, 48) giving access to the said internal volume of the said skeleton (16),
**characterized in that**:
- the said skeleton (16) includes, in addition to the aforementioned five panels (28, 30, 32, 34, 36), a lower horizontal flat sixth panel (38);
- the said skeleton (16) is made up of the said six panels (28-38) assembled together to form a box-structure delimiting an internal volume forming a loading bay for example of the luggage hold type; and
- the aperture in the said covering element corresponding to the said lateral panel (32, 34) has dimensions corresponding to those of the aperture (46, 48) therein, so that the said loading has access to the said bay through the said apertures.

2. Helicopter fuselage according to Claim 1, **characterized in that** the said panels (28-38) of the skeleton (16) are parallel by pairs and orthogonal by pairs.

3. Helicopter fuselage according to one of Claims 1 and 2, **characterized in that** at least one of the transverse panels (28, 30) includes an internal aperture (40, 44) giving access to the said internal volume of the skeleton (16).

4. Helicopter fuselage according to Claim 3, **characterized in that** the said internal aperture (40, 44) is delimited laterally by the two lateral panels (32, 34).

5. Helicopter fuselage according to any one of Claims 1 to 4, **characterized in that** the internal volume of the skeleton (16) is partitioned by at least one horizontal partition (52, 54).

6. Helicopter fuselage according to Claim 5, **characterized in that** the internal volume of the skeleton is partitioned into three vertically superimposed areas by two upper (52) and lower (54) horizontal partitions.

7. Helicopter fuselage according to Claim 6, **characterized in that** the upper horizontal partition (52) interacts with the upper horizontal panel (36) and with corresponding portions of the transverse (28, 30) and lateral (32, 34) panels to form an upper box section (58) of the skeleton, **in that** the lower horizontal partition (52) interacts with the lower horizontal panel (38) and the corresponding portions of the transverse (28, 30) and lateral (32, 34) panels to form a lower box section (56) of the skeleton, and **in that** the opposing faces of the upper (52) and lower (54) horizontal partitions constitute the bulkhead and the floor of a hold.

8. Helicopter fuselage according to either of Claims 6 and 7 taken in combination with Claims 3 or 4, **characterized in that** each internal aperture (40, 44) formed in a transverse panel (28, 30) is delimited vertically by the upper (52) and lower (54) horizontal partitions.

9. Helicopter fuselage according to any one of Claims 6 to 8, **characterized in that** each internal aperture (46, 48) formed in a lateral panel (32, 34) is delimited vertically by the upper (52) and lower (54) horizontal partitions.

10. Helicopter fuselage according to any one of Claims 1 to 9, **characterized in that** the front structure includes two longerons (60, 62) which are linked respectively to the lower parts of the lateral panels (32, 34).

11. Helicopter fuselage according to Claim 10, **characterized in that** at least a part of each of the two longerons (60, 62) is produced in a single piece with the corresponding lateral panel (32, 34).

12. Helicopter fuselage according to any one of Claims 6 to 8, **characterized in that** the front structure includes a cabin floor which extends substantially in the extension of the lower horizontal partition (54).

13. Helicopter fuselage according to any one of Claims 1 to 12, **characterized in that** the front structure includes means for fixing on to the front transverse panel (28).

14. Helicopter fuselage according to any one of Claims 1 to 13, **characterized in that** the rear structure includes means for fixing on to the rear transverse panel (30).

15. Helicopter fuselage according to Claim 14 taken in combination with Claim 7, **characterized in that** the rear structure includes means for fixing on to the portion of the rear transverse panel (30) which delimits the upper box section (58).

## Patentansprüche

1. Hubschrauberrumpf des Typs, der eine Mittelstruktur (10) hat, die mit einer Vorderstruktur (12), einer Hinterstruktur (14) und einem Fahrwerk (26) verbunden ist und auf der sich ein Getriebe, ein Hauptrotor und mindestens ein Triebwerk (50) befinden, und des Typs, bei dem die Mittelstruktur ein Gerüst (16) mit Verkleidungselementen hat, die die äußere Form des Rumpfes bestimmen, wobei das Gerüst (16) aus einer vorderen ebenen Querplatte (28), einer hinteren ebenen Querplatte (30), zwei ebenen Seitenplatten (32,34) und einer oberen ebenen horizontalen Platte (36) besteht und die vordere Querplatte (28) und die hintere Querplatte (30) die Vorderstruktur (12) und die Hinterstruktur (14) tragen sollen und jede vordere (28) und hintere (30) Querplatte sich in Querrichtung so verlängern, dass sie eine Quertrennwand bilden, deren Kontur (39,42) im wesentlichen dem Profil des entsprechenden Querschnitts der Außenform des Rumpfs entspricht, wobei mindestens eine der beiden Seitenplatten (32, 34) und das entsprechende Verkleidungselement jeweils Öffnungen (46,48) umfassen, die in den Innenraum des Gerüsts (16) führen,
**dadurch gekennzeichnet, dass**
- der Rumpf (16) zusätzlich zu den fünf vorgenannten Platten (28,30,32,34,36) eine sechste untere ebene horizontale Platte (38) umfasst;
- das Gerüst (16) aus den sechs Platten (28- 38) besteht, die miteinander verbunden sind, sodass sie einen Kasten bilden, der einen Innenraum begrenzt, der einen Laderaum, zum Beispiel einen Frachtraum für Gepäck bildet; und
- die Öffnung in der genannten Seitenplatte (32,34) entsprechenden Verkleidungselement Abmessungen besitzt, die denen der Öffnung (46,48) in letzterem entsprechen, sodass die Ladung durch die Öffnungen Zugang zum Laderaum hat.

2. Hubschrauberrumpf nach Anspruch 1,
**dadurch gekennzeichnet, dass** die Platten (28-36) des Gerüsts (16) paarweise parallel und paarweise senkrecht zueinander angeordnet sind.

3. Hubschrauberrumpf nach einem der Ansprüche 1 oder 2,
**dadurch gekennzeichnet, dass** mindestens eine der Querplatten (28,30) eine innere Öffnung (40,44) besitzt, die in den Innenraum des Rumpfs (16) führt.

4. Hubschrauberrumpf nach Anspruch 3,
**dadurch gekennzeichnet, dass** die innere Öffnung (40,44) seitlich durch die beiden Seitenplatten (32,34) begrenzt wird.

5. Hubschrauberrumpf nach einem der Ansprüche 1 bis 4,
**dadurch gekennzeichnet, dass** der Innenraum des Gerüsts (16) durch mindestens eine horizontale Trennwand (52,54) unterteilt wird.

6. Hubschrauberrumpf nach Anspruch 5,
**dadurch gekennzeichnet, dass** der Innenraum des Gerüsts durch zwei horizontale Trennwände, eine obere (52) und eine untere (54), in drei vertikal übereinanderliegende Bereiche unterteilt wird.

7. Hubschrauberrumpf nach Anspruch 6,
**dadurch gekennzeichnet, dass** die obere horizontale Trennwand (52) mit der oberen horizontalen Platte (36) und mit entsprechenden Abschnitten der Querplatten (28,30) und der Seitenplatten (32,34) unter Bildung eines oberen Kastens (58) des Gerüsts zusammenwirkt, dadurch, dass die untere horizontale Trennwand (52) mit der unteren horizontalen Platte (38) und den entsprechenden Abschnitten der Querplatten (28,30) und der Seitenplatten (32,34) unter Bildung eines unteren Kastens (56) des Gerüsts zusammenwirkt, und dadurch, dass die einander gegenüberliegenden Seiten der oberen (52) und der unteren (54) horizontalen Trennwand Boden und Decke eines Laderaums bilden.

8. Hubschrauberrumpf nach einem der Ansprüche 6 oder 7 in Verbindung mit einem der Ansprüche 3 oder 4,
**dadurch gekennzeichnet, dass** jede innere Öffnung (40,44) in einer Querplatte (28,30) vertikal durch eine obere (52) und eine untere (54) horizontale Trennwand begrenzt wird.

9. Hubschrauberrumpf nach einem der Ansprüche 6 bis 8,
**dadurch gekennzeichnet, dass** jede innere Öffnung (46,48) in einer Querplatte (32,34) vertikal durch eine obere (52) und eine untere (54) horizontale Trennwand begrenzt wird.

10. Hubschrauberrumpf nach einem der Ansprüche 1 bis 9,
**dadurch gekennzeichnet, dass** die Vorderstruktur zwei Holme (60,62) hat, die jeweils mit den unteren Teilen der Seitenplatten (32,34) verbunden sind.

11. Hubschrauberrumpf nach Anspruch 10,
**dadurch gekennzeichnet, dass** mindestens ein Teil jedes der beiden Holme (60,62) aus einem Stück mit der entsprechenden Seitenplatte (32,34) hergestellt ist.

12. Hubschrauberrumpf nach einem der Ansprüche 6 bis 8,
**dadurch gekennzeichnet, dass** die Vorderstruktur einen Kabinenboden umfasst, der sich etwa in der Verlängerung der unteren horizontalen Trennwand (54) erstreckt.

13. Hubschrauberrumpf nach einem der Ansprüche 1 bis 12,
**dadurch gekennzeichnet, dass** die Vorderstruktur Mittel zur Anbringung an der vorderen Querplatte (28) hat.

14. Hubschrauberrumpf nach einem der Ansprüche 1 bis 13,
**dadurch gekennzeichnet, dass** die Hinterstruktur Mittel zur Anbringung an der hinteren Querplatte (30) hat.

15. Hubschrauberrumpf nach Anspruch 14 in Verbindung mit Anspruch 7,
**dadurch gekennzeichnet, dass** die Hinterstruktur Mittel zur Anbringung an dem Abschnitt der hinteren Querplatte (30) hat, der den oberen Kasten (58) begrenzt.
